# EUROPÄISCHE PATENTANMELDUNG

(11) **EP 1 215 041 A1**
(43) Veröffentlichungstag der Anmeldung: **19.06.2002**
(21) Anmeldenummer: 01129941.9
(22) Anmeldetag: 17.12.2001
(51) Int. Cl.: B32B 27/26, C08K 3/00, H01B 1/00

(54) **Leitfähige, kratzfeste und bedruckbare Oberflächen**

(30) Priorität: 16.12.2000 DE 10062865
(71) Anmelder: technoplast Beschichtungsgesellschaft mbH, 50767 Köln (DE)
(72) Erfinder: Schleussner, Martin Dr., 50765 Köln (DE); Weber, Arne, 52064 Aachen (DE)
(74) Vertreter: Meyers, Hans-Wilhelm, Dr.Dipl.-Chem.

(57) **Zusammenfassung**

UV- oder wärmehärtbare Zusammensetzung enthaltend leitfähige anorganische Pigmente und unlösliche Füllstoffe, wobei die Zusammensetzung nach der Aushärtung eine elektrische Leitfähigkeit mit einem elektrischen Widerstand von 10³ Ohm/□ bis 10¹¹ Ohm/□ aufweisen.

## Beschreibung

Für Anwendung im Explosionsschutz, in der Antistatik und im ESD- (Electrostatic discharge) und EMV-Bereich (Elektromagnetische Verträglichkeit) werden Widerstände im Bereich von 10³ bis 10¹¹ Ohm/□ vorzugsweise im Bereich von 10⁴ bis 10⁸ Ohm/□ benötigt. Solche Oberflächen erlauben die kontrollierte Ableitung von elektrostatischen Aufladungen, ohne dabei durch Funkenbildung Zündquellen zu bilden. Die Oberflächen, die für solche Anwendungen eingesetzt werden, müssen vorzugsweise transparent, kratzfest und texturiert sein und sollen zum Bedrucken mit Dekorfarben bzw. klaren Fensterlacken auf UV- bzw. wärmehärtender Basis geeignet sein.

Solche leitfähigen transparenten Oberflächen werden zum einen durch Antistatikbeschichtung mit quartären Ammoniumsalzen oder ITO-Bedampfung oder durch Verwendung leitfähiger organischer Polymere hergestellt. Quartäre Ammoniumsalze führen jedoch einerseits zu einer Reduktion der Haftung bei Bedruckung, andererseits sind die quartären Ammoniumsalze in ihrer Leitfähigkeit stark von Feuchtigkeitseinflüssen der Umwelt abhängig. Die Verwendung von leitfähigen organischen Polymeren hat den Nachteil, dass diese eine blaue oder grüne Einfärbung aufweisen und somit bei Hinterdruckung den Farbton insbesondere gelber, aber auch roter Farben, beeinflussen. Weiterhin wurde beobachtet, dass leitfähige Polymere beim Einbinden in Lacke nach mehrfacher thermischer Erhitzung, die bei Druckvorgängen notwendig sind, ihre Leitfähigkeit verlieren. Darüber hinaus ist die Löslichkeit leitfähiger Polymere in Lacken, Bindern und Primern eingeschränkt und limitiert damit die Möglichkeiten, texturierte Oberflächen herzustellen.

Aufgabe der vorliegenden Erfindung war es somit, leitfähige, kratzfeste und bedruckbare Oberflächen bereitstellen, die keine Eigenfärbung aufweisen und thermisch stabil sind. Überraschenderweise wurde nun gefunden, dass dies möglich ist, wenn leitfähige anorganische Pigmente und unlösliche Füllstoffe in wärme- oder UV-härtbare Lacke einzubringen, um somit geeignete Zusammensetzungen und Kunststofffolien zu erhalten. Gegenstand der Erfindung sind somit zum einen UV- oder wärmehärtbare Zusammensetzungen enthaltend leitfähige anorganische Pigmente und unlösliche Füllstoffe, wobei die Zusammensetzungen nach der Aushärtung eine elektrische Leitfähigkeit mit einem elektrischen Widerstand von 10³ Ohm/□ bis 10¹¹ Ohm/□ aufweisen.

Die so erhaltenen ausgehärteten Zusammensetzungen weisen vorzugsweise eine oder mehrere der folgenden Eigenschaften auf:
- transparent
- strukturierte Oberfläche
- kratzfest
- lösungsmittelfest.

Ausgehärtet bedeutet, dass mehr als 50% der reaktiven Gruppen der Monomermischung reagiert haben. Dies lässt sich z.B. durch DTA-Verfahren (Differentialthermoanalyse, bei UV-Einstrahlung) messen.

Die elektrische Leitfähigkeit der Zusammensetzung nach der Aushärtung kann durch Art und Menge des anorganischen Pigmentes ausgewählt werden. Der Widerstand wird in Abhängigkeit von der späteren Anwendung der mit der Zusammensetzung beschichteten Folie gewählt. Er liegt bevorzugt in einem Bereich von 10⁴ bis 10⁹ Ohm/□ und noch mehr bevorzugt im Bereich von 10⁴ bis 10⁸ Ohm/□. Gemessen wird die elektrische Leitfähigkeit gemäß DIN IEC 60093.

Durch die Zumengung von unlöslichen Füllstoffen erhöht sich die Wahrscheinlichkeit, dass die leitfähigen anorganischen Pigmente so räumlich benachbart angeordnet sind, dass sich feine, verzweigte Ketten von diesen Pigmenten ergeben. Hierdurch wird bei gleicher Leitfähigkeit eine geringere Menge an leitfähigen anorganischen Pigmenten benötigt. Der verringerte Anteil der elektrisch leitfähigen Pigmente verbessert die Lichtdurchlässigkeit und verringert die Lichtstreuung, wie dies für den Dekorfolienbereich wünschenswert ist.

Bevorzugt ist der Durchmesser der unlöslichen Füllstoffe größer als der Durchmesser der leitfähigen anorganischen Pigmente. Bevorzugt ist der mittlere Durchmesser der anorganischen Pigmente um den Faktor 2, besonders bevorzugt um den Faktor 5 bis 10 größer als der mittlere Durchmesser der anorganischen Pigmente. Geeignete mittlere Partikeldurchmesser für die anorganischen leitfähigen Pigmente liegen im Bereich von 0,5 bis 3 µm. Geeignete mittlere Partikeldurchmesser für die unlöslichen Füllstoffe liegen im Bereich von 1 bis 10 µm.

Unlösliche Füllstoffe im Sinne dieser Anmeldung bedeutet, dass die Füllstoffe aus der noch flüssigen Zusammensetzung durch Verfahren wie Filtration oder Zentrifugation wieder abgetrennt werden können. Bevorzugt sind die unlöslichen Füllstoffe transparent. Geeignete Füllstoffe sind Kieselsäure, insbesondere pyrrolisierte Kieselsäure, Glitter, Zellulose, Glaspartikel, Glaskügelchen (evtl. auch mit Haftvermittlern beschichtet oder plasmachemisch modifiziert).

Die erfindungsgemäße Zusammensetzung ist vorzugsweise nach der Härtung transparent. Transparent im Sinne der Erfindung bedeutet, dass sie einen Haze-Wert im Bereich von 10-95 aufweist. Dieser Wert wird gemessen mit einem Hazegard XL-211 Fa. Gardner.

Strukturierte Oberflächen im Sinne dieser Erfindung weisen mikroskopische Wiederholungen von Strukturelementen auf. Diese können durch R_{A}/R_{Z} Werte charakterisiert werden. Geeignete Werte liegen hierbei für R_{A} im Bereich von 0,1 µm bis 10 µm und für R_{Z} im Bereich von 4 bis 20 µm. Gemessen werden die Werte gemäß EN 292-1, EN 292-2. Die Strukturierung der Oberfläche ist insbesondere wichtig für Bedienelemente, da der taktile Eindruck der Folie von der Struktur der Oberfläche mitbestimmt wird.

Diese Strukturierung kann durch den Einsatz der unlöslichen Füllstoffe erreicht werden, aber auch durch chemische Zusätze.

Es wird bevorzugt, dass die UV- oder wärmehärtbare Zusammensetzung nach der Härtung eine mattierte Oberfläche ergibt. Die Mattierung hängt eng mit der Strukturierung zusammen. Die Struktur wird auch z. B. durch Runzellacke oder Mattierungen erreicht, die beim Aushärten als Beschichtung oder partieller Siebdruck spezifische Oberflächen ergeben.

Bevorzugt sind die erfindungsgemäßen Kunststofffolien thermisch verformbar.

Geeignete anorganische Pigmente sind keramische Oxide von Metallen der Nebengruppen V und VI, insbesondere ITO und IWO. Geeignet sind auch metalldotierte Metalloxide, beispielsweise Ga, Sn, As-dotierte Metalloxide wie antimondotierte Zinnoxide. Damit beschichteter Glimmer ist als Handelsprodukt zum Beispiel von der Firma Merck, Darmstadt erhältlich. Es können auch mehrere Pigmente in der Zusammensetzung kombiniert werden.

Weitere geeignete leitfähige anorganische Pigmente sind erhältlich von der Firma Siebert Hegner (Dentall TM 220).

Gegenstand der Erfindung ist auch eine Kunststofffolie, die mit der erfindungsgemäßen Zusammensetzung beschichtet ist. Geeignete Folien sind insbesondere Folien aus Polyethylen, Polyethylenterephtalat, Polyethylennaphtalat, Polyurethan, Polyvinylchlorid oder aus Polycarbonat oder Copolymerisate bzw. Mischungen davon. In Abhängigkeit von der Kunststofffolie und der Zusammensetzung kann es sinnvoll sein, zusätzlich einen Haftvermittler einzusetzen.

Durch die Verwendung einer solchen Haftvermittlerschicht wird die leitfähige Zusammensetzung (Dekorschicht) dauerhaft mit der Kunststofffolie verbunden. Dies erhöht die thermische und mechanische Stabilität, die je nach Einsatz-Zweck des Produktes erforderlich ist.

Die erfindungsgemäßen Kunststofffolien sind vorzugsweise bedruckbar und weisen einen Gitterschnitt von 0 bis 2 , bevorzugt 0 oder 1 auf.

Die erfindungsgemäße Zusammensetzung kann hergestellt werden durch Dispergieren von anorganischen Pigmenten zusammen mit unlöslichen Füllstoffen in UV- oder wärmehärtbaren Lacken. Die Beschichtung der Kunststofffolie kann erfolgen durch Auftragen mittels Drahtrakel, Kisscoating/Reverse-roll oder Siebdruck und anschließendes Härten.

Bevorzugt weisen die Folien auf der einen Seite die erfindungsgemäße leitfähige Schicht und auf der Rückseite eine haftvermittelnden Schicht zur Druckvorbereitung auf. Diese haftvermittelnde Schicht ist jeweils auf den späteren Verwendungszweck, beispielweise Siebdruck, Inkjet-Druck, Laser-Copy-Druck oder Offset-/Flexodruck anzupassen. Entsprechende haftvermittelnde Schichten sind bekannt. Sie sind beispielsweise unter der Bezeichnung Desmodur von der Firma Bayer AG erhältlich. Die Verbesserung der Haftvermittlung zwischen der Folie und dieser bedruckbaren Seite kann durch verschiedene Verfahren erreicht werden, die dem Fachmann grundsätzlich bekannt sind. Es handelt sich dabei um:
- Inlineprimerung bei der Verreckung der Folien z.B. geeignet für Polyvinylidenchlorid (PVDC),
- Primerung als Offline-Beschichtung beispielsweise durch Polyurethane und lösliche Polyethylentherepthalate, die in geeignete Systeme (Isocyanate, Silane) eingebettet sind,
- haftvermittelnde Schichten, die aus aminofunktionalen Polymeren bestehen, die kovalent mit dem Substrat verbunden sind, z.B. durch Aktivierung des Substrates und Abscheidung von Aminen aus der Gasphase oder - offline - aus der Flüssigphase. Geeignete Amine sind beispielsweise Polyethylenimide, Ebecryl® , acrylierte Amine der Firma Cyba.
- Gelatinen und Polyvinylalkohole auch zusammen mit Füllstoffen wie z.B. pyrolisierte Kieselsäuren, Syloid® , der Firma GRACE.

Möglich sind auch Kombinationen der oben genannten Beschichtungsarten.

In einer bevorzugten Ausführungsform ist die erfindungsgemäß eingesetzte leitfähige Beschichtung so ausgehärtet, dass noch frei reaktive Gruppen auf der Oberfläche verbleiben. Bei UV-härtbaren Zusammensetzungen kann dies durch die Steuerung der Reaktionsenergie erreicht werden, d.h. durch den UV-Lampen Abstand, die Bestrahlungsdauer und die Schichtdicke. Bei einer beschichteten Folie kann auch die Foliengeschwindigkeit entsprechend gesteuert werden.

Bei wärmehärtenden Schichten kann dies dadurch erreicht werden, dass die Beschichtungszusammensetzung nur für einen kürzeren Zeitraum oder auf geringere Temperaturen erwärmt werden. Die kurzzeitige Erwärmung erfolgt bei Temperaturen über 100°C, vorzugsweise durch Luftstromtrockner (konvektiver Wärmeübergang) oder durch Wärmestrahlung (Infrarotstrahlung). Bei geringen Temperaturen wird das beschichtete Substrat in Öfen oder Räumen bei Temperaturen zwischen 40 und 100°C gelagert. Abhängig von der beschichtungsspezifischen Reaktionskinetik werden für beide Wärmetrocknungen und Temperaturbereiche die Einwirkzeiten ermittelt. Hierdurch bleiben auf einer entsprechend beschichteten Folie freie reaktive Gruppen, die eine bessere Anhaftung hierauf aufgetragener Schichten erlauben.

Die erfindungsgemäß eingesetzten Zusammensetzungen führen nach Auftragung zu einer mattierten Struktur. Um auf Teilen oder der gesamten Folie die Transparenz zu erhöhen, werden sogenannte Fensterlacke eingesetzt, die die Mikrostruktur so auffüllen, dass die Lichtstreuung vermindert wird. Durch die Verwendung nicht vollständig ausgehärteter Zusammensetzungen wird hier ein besonders guter Haftverbund der Fensterlacke erreicht, der dann hinreichende Stabilität auch beispielsweise für den Einsatz als Folientastatur aufweist.

Gegenstand der Erfindung ist auch die Verwendung der erfindungsgemäßen Kunststofffolie zum Abführen elektrostatischer Ladung von Oberflächen unter Explosionsschutzbedingungen, insbesondere als Wandverkleidung, Bodenbeläge, Bildschirm, Gehäuse oder Tastatur. Die Herstellung und die Eigenschaften der erfindungsgemäßen Zusammensetzung und der erfindungsgemäßen Kunststofffolie werden durch die folgenden Beispiele näher erläutert.

### Prüfvorschrift Kratzfestigkeit

Die Beurteilung der Kratzfestigkeit wird wie folgt durchgeführt.
1. Durch starkes Reiben mit einem sauberen, trockenen Tuch aus Baumwolle, dürfen keine Kratzer oder Beschädigungen der strukturierten Oberfläche erzeugt werden.
2. Durch mäßiges Reiben der Struktur auf einer glatten Tischunterlage (lackierte Holzplatte) dürfen nur geringe Kratzspuren auf der Folie zu erkennen sein.

### Prüfvorschrift Trübungsmessung am Hazegard XL-211

Norm: ASTM D1003
Format der Probe: Durchmesser mindestens 30 mm

### Messvorgang

- Gerät einschalten
   Kippschalter "Power" auf Position "ON".
   Kippschalter "REFERENCE-OPEN" auf Position "OPEN".
   Kippschalter auf Position "X1"
- Trübung messen
   mit Drehknopf "Zero" abgleichen, bis Display 00.0 anzeigt.
   Ein sauberes Prüfmuster, frei von Fingerabdrücken oder Kratzern, am Eingang der Sensoreinheit mit der Klemmvorrichtung platzieren.
   Kippschalter "REFERENCE-OPEN" auf Position "REFERENCE"
   Mit Drehknopf ""ALIBRATE" abgleichen, bis Display 100.0 anzeigt
   Trübung am Display ablesen, Angabe in %
   nach erfolgter Messung Prüfmuster entfernen; Gerät ist für nächste Prüfung bereit

Anmerkung: Bei der Trübungsmessung wird **mit** dem Prüfmuster auf 100.0 kalibriert.

### Prüfungsvorschrift Lösungsmittelbeständigkeit

Prüfmittel: ACETON (pa), BENZIN (pa), CHLOROFORM (pa), METHYLENCHLORID (pa), Baumwollwatte (medizinisch)
Format der Probe: DIN A4
Durchführung:
Schutzmaßnahmen treffen (Schutzbrille, Luftzufuhr, Handschuhe)
Die Probe auf eine stabile, ebene und lösungsmittelfeste Unterlage legen
Ein Wattestück von der Größe eines Tischtennisballes bis zur Tropffeuchte mit dem Testmedium tränken und leicht ausdrücken.
In einer Hin- und Herbewegung auf einer Strecke von 15 cm mit festem, konstantem Andruck auf der Beschichtung reiben. Diesen Bewegungsvorgang innerhalb einer Minute 50 mal ausführen, auf einem geschlossenen Lösungsmittelfilm achten.
Nach Abdampfen des Lösungsmittels erfolgt die Bewertung.
Bewertung:
- Beständig: leichte Verfärbung oder sehr geringe Ablösungen (kleiner 5% der Testfläche)
- Unbeständig: mehr als 5% der Testoberfläche abgelöst sind

### Prüfvorschrift Haftung/Gitterschnitt

Prüfmittel: Gitterschnitt-Prüfgerät (Schnittabstand 1mm)
   Klebeband bei Produktspezifikation Tesa (rot) 4156
Format der Probe: beliebig

Durchführung:
Prüfmuster auf eine ebene und harte Unterlage auflegen (Glasplatte).

Gitterschnittgerät plan auflegen und mit mäßigem Druck den Schnitt so ziehen, dass alle Schnittlinien gleichmäßig ausgeprägt sind.

Den zweiten Gitterschnitt im rechten Winkel zum ersten ziehen.

Das verwendete Klebeband wird luftblasenfrei mit einem Schaber so aufgeklebt, dass eine geschlossene, innige Verbindung zum Untergrund erfolgt.

Klebeband mit einer schnellen Bewegung (Ruck) vom Untergrund losreißen.
Auswertung:

Die Beurteilung des Gitterschnittes erfolgt mit Bewertungen von + [Plus] bis - [Minus]:

| **Bewertung** | **Schaden** |
|---|---|
| 0 | Nichts wird abgelöst, scharfe Linien, scharfe Kanten, keine Ablösungen |
| 1 | Scharfe Linien, mikroskopische Kantenschäden, keine Ablösung |
| 2 | Saubere Linien, Kantenschäden, mikroskopische Ausrisse |
| 3 | Leichte Linienschäden, vereinzelte Ausrisse kleiner Quadrate |
| 4 | Linienschäden, vereinzelte Ausrisse kleiner Quadrate, Oberflächenschäden |
| 5 | Linienschaden, Beschichtungsablösung |
| 6 | Keine Farbhaftung, keine Zwischenhaftung |

### Beispiel 1

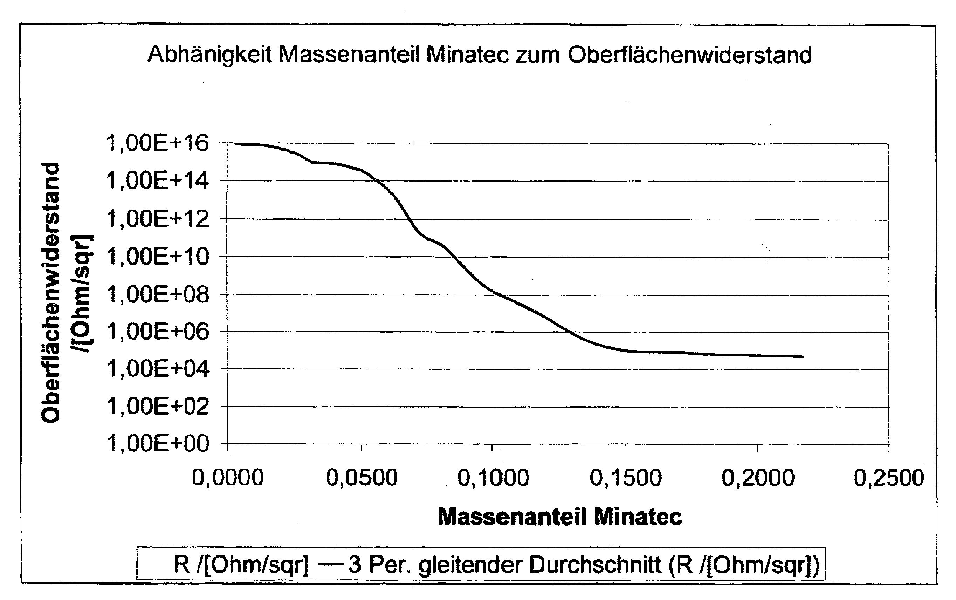

W: Massenanteil, Folie: Melinex ST 725 (Handelsprodukt Fa. DuPont), Polyethylentherephtalat, beidseitig druckvorbehandelt, 175 µm
Rezeptur:
   - W (Minatec, MERCK '): = 0,096 Pigment
   - W (Buthylacetat): = 0,371 Lösungsmittel
   - W (SL 300, Herberts ): = 0,528 Strukturlack
   - W (Kieselsäure, pyrolisiert): = 0,005 Füllstoff
Rakel: 8 (30 g Trockenauftrag)
Trocknung, konvektiv: 120°C, 6 min
Trocknung, UV, W_{H}g_{Dampf}: 3500 mJ/cm²
Ergebnis:
   - R: = 2 · 10⁷ Ohm/
   - d: = 200 µm
   - R_{A}: = 1,9 - 2,1 µm
   - R_{z}: = 13 - 15 µm
   - Haze: = 25 - 36
   - Glanz (60°): = 27 - 33
   - Bedruckung: = Marabu UVPS + UVH44 (UV-Fensterlack)
   - Gitterschnitt: 0
Abhängigkeit Widerstand (R) zu Massenanteil (W_{Minatec}): siehe Figur 1

### Beispiel 2

Lackformulierung für wärmehärtende Lacke:
- W (Klarlack AR/Z, Fa. Diegel): = 0,6944
- W (Härter 19074, Fa. Diegel): = 0,0903
- W (Syloid ED50, Fa. Grace): = 0,0069
- W (Minatec CM 31, Fa. Merk): = 0,0694
- W (Verdünner, Für AR/Z, Fa. Diegel): = 0,1389
Beschichtung:
Drahtrakel, 25 bis 28 g/m²
Aushärtung: Luftstrom, 130°C, 5 min
   Basisfolie: Melinex 725, DuPont, beidseitig druckvorbehandelt. Die beschichtete Folie zeigt Eigenschaften, die der Folie gemäss Beispiel 1 entsprechen.

## Patentansprüche

1. UV- oder wärmehärtbare Zusammensetzung enthaltend leitfähige anorganische Pigmente und unlösliche Füllstoffe, wobei die Zusammensetzung nach der Aushärtung eine elektrische Leitfähigkeit mit einem elektrischen Widerstand von 10³ Ohm/□ bis 10¹¹ Ohm/□ aufweisen.

2. Zusammensetzung nach Anspruch 1, **dadurch gekennzeichnet, dass** die Zusammensetzung nach der Aushärtung
• transparent ist und/oder
• eine strukturierte, mutierte Oberfläche aufweisen.

3. Zusammensetzung nach Anspruch 1 oder 2, **dadurch gekennzeichnet, dass** die leitfähigen anorganischen Pigmente aus keramischen Oxide von Metallen der Nebengruppen V und VI ausgewählt sind, insbesondere ITO und IWO.

4. Zusammensetzung nach mindestens einem der Ansprüche 1 bis 3, **dadurch gekennzeichnet, dass** die unlöslichen Füllstoffe Kieselsäure, Glitter und/oder Zellulose sind.

5. Kunststofffolie ausgerüstet mit einer Zusammensetzung nach einem der Ansprüche 1 bis 4.

6. Kunststofffolie nach Anspruch 5, **dadurch gekennzeichnet, dass** die Kunststofffolie aus Polyethylen, Polyethylenterephtalat, Polyethylennaphtalat, Polyurethan, Polyvinylchlorid oder aus Polycarbonat besteht.

7. Kunststofffolie nach Anspruch 5 oder 6, **dadurch gekennzeichnet, dass** zwischen der Kunststofffolie und der Zusammensetzung nach einem der Ansprüche 1 bis 4 eine haftungsvermittelnde Schicht vorhanden ist.

8. Kunststofffolie nach einem der Ansprüche 5 bis 7, **dadurch gekennzeichnet, dass** die Folie einen Gitterschnitt für die Schichthaftung von 0 bis 2 aufweist.

9. Verfahren zur Herstellung einer Zusammensetzung nach einem der Ansprüche 1 bis 4, **dadurch gekennzeichnet, dass** leitfähige anorganische Pigmente zusammen mit unlöslischen Füllstoffe in einer UV- oder wärmehärtbaren Lackformulierung dispergiert werden.

10. Verfahren zur Herstellung einer Kunststofffolie nach einem der Ansprüche 5 bis 8, **dadurch gekennzeichnet, dass** eine Zusammensetzung nach einem der Ansprüche 1 bis 4 durch Drahtrakel, Reverse-roll, Kisscoating oder Siebdruck aufgetragen und anschließend gehärtet wird.
